# DEMANDE DE BREVET EUROPEEN

(11) **EP 4 725 835 A1**
(43) Date de publication de la demande: **15.04.2026**
(21) Numéro de dépôt: 25207174.1
(22) Date de dépôt: 07.10.2025
(51) Int. Cl.: B64C 15/02, B64C 39/10, B64D 27/02, B64D 29/04, F02K 1/00

(54) **AERONEF A TRACTION VECTORIELLE**

(30) Priorité: 08.10.2024 FR 2410874
(71) Demandeur: Villette, Alain, 79700 Saint Pierre Les Echaubrognes (FR); Villette, Jérémy, 49600 Beaupréau en Mauges (FR); Bossard, Christian, 49300 Cholet (FR)
(72) Inventeur: Villette, Alain, 79700 Saint Pierre Les Echaubrognes (FR); Villette, Jérémy, 49600 Beaupréau en Mauges (FR); Bossard, Christian, 49300 Cholet (FR)
(74) Mandataire: Cabinet Chaillot

(57) **Abrégé**

La présente invention porte sur un aéronef (1) à traction vectorielle, comportant :
- une voilure se présentant sous la forme d'une aile (2) ;
- une dérive se présentant sous la forme d'au moins un aileron arrière (3) porté par ladite aile (2) ; et
- un ensemble moteur (4) relié à ladite aile (2) pour la traction de l'aéronef (1),
caractérisé par le fait que ledit ensemble moteur (4) est disposé devant ladite aile (2) en étant relié à celle-ci par au moins un bras (6), et qu'il comporte au moins une turbine (10) configurée pour créer en fonctionnement un jet d'air évacué vers ladite aile (2) par une tuyère orientable (11).

## Description

La présente invention porte sur un aéronef à traction vectorielle.

Pour se diriger en vol, un aéronef utilise un ensemble de surfaces mobiles appelées gouvernes qui agissent sur l'air et permettent de piloter l'aéronef.

La suppression des gouvernes, réalisée sur des aéronefs à poussée vectorielle, permet d'augmenter la maniabilité et la furtivité de l'aéronef. Ces aéronefs orientent le flux du jet d'un réacteur/d'une turbine afin de se diriger.

Il a été recherché une amélioration à de tels aéronefs sans gouverne pour en augmenter le contrôle et la maniabilité et diminuer le poids.

Les aéronefs à traction vectorielle, en plus de supprimer les gouvernes, permettent d'améliorer leurs performances par l'intermédiaire du phénomène de portance induite. En effet, par disposition de l'ensemble moteur devant l'aile de l'aéronef, un phénomène de portance induite est créé ce qui améliore le contrôle de l'appareil.

De plus, cela permet également de guider l'appareil au sol sans avoir à utiliser des dispositifs de commande du train d'atterrissage, ce qui permet une diminution de la masse de l'appareil.

La présente invention a pour objet un aéronef à traction vectorielle, comportant :
- une voilure se présentant sous la forme d'une aile ;
- une dérive portée par ladite aile ; et
- un ensemble moteur relié à ladite aile pour la traction de l'aéronef,
caractérisé par le fait que ledit ensemble moteur est disposé devant ladite aile en étant relié à celle-ci par au moins un bras, et qu'il comporte au moins une turbine configurée pour créer en fonctionnement un jet d'air évacué vers ladite aile par une tuyère orientable.

Le caractère orientable de la tuyère permet d'orienter le jet d'air évacué. En faisant ainsi l'aéronef est dépourvu de gouvernes de direction, ce qui réduit par conséquent le nombre de pièces mécaniques. L'aéronef est alors plus léger, plus fiable et moins coûteux. Ce gain de poids est notamment avantageux pour un aéronef 100 % électrique.

La dérive peut se présenter sous la forme d'au moins un aileron arrière porté par l'aile.

L'axe d'une turbine peut être orienté selon une ligne parallèle à la ligne avant-arrière de l'aile.

L'ensemble moteur peut comporter deux turbines. Lorsque l'aéronef comporte deux turbines, ce dernier est capable de tourner autour de son axe longitudinal, améliorant sa furtivité, lorsqu'une turbine s'incline dans un sens et l'autre dans le sens opposé.

L'ensemble moteur peut être disposé dans une nacelle par laquelle il est relié à l'aile par le ou les bras, et qui est ouverte à l'avant et à l'arrière en position de montage.

L'ensemble moteur peut être amovible. Le caractère amovible de l'ensemble moteur permet de modifier le nombre de turbines qui constituent l'ensemble moteur de façon simple.

Conformément à un mode de réalisation particulier de l'aéronef selon la présente invention, une turbine est constituée par un rotor à pales logé dans un carter cylindrique et que la tuyère associée à la turbine, montée pour diriger le jet d'air vers l'aile de l'aéronef, est constituée de trois parties, à savoir
- une première partie de tuyère constituée par une première bague apte à être enfilée sur le carter de la turbine et à y être fixée, et portant extérieurement :
   - un support pour un premier servomoteur de commande des mouvements de la tuyère vers la droite et vers la gauche et un support pour un second servomoteur de commande des mouvements de la tuyère vers le haut et vers le bas ; et
   - deux partenaires de liaison pivot diamétralement opposés, situés dans un plan perpendiculaire au plan moyen de l'aile ;
- une deuxième partie de tuyère constituée par une deuxième bague apte à être enfilée partiellement sur la première bague dans sa région d'extrémité tournée vers l'aile en position de montage et à pivoter autour d'un axe perpendiculaire au plan moyen de l'aile en position de montage, et portant :
   - intérieurement, deux partenaires de liaison pivot aptes à coopérer avec les partenaires de liaison pivot de la première partie de tuyère ; et
   - extérieurement, deux partenaires de liaison pivot diamétralement opposés, situés dans un plan parallèle au plan moyen de l'aile en position de montage ; et
- une troisième partie de tuyère constituée par une troisième bague apte à être enfilée partiellement sur la deuxième bague dans sa région d'extrémité tournée vers l'aile en position de montage et portant :
   - intérieurement, deux partenaires de liaison pivot apte à coopérer avec les partenaires de liaison pivot portés extérieurement par la deuxième partie de tuyère ; et
   - extérieurement, dans un plan parallèle à l'aile et d'un côté, un point de fixation d'une bielle d'un premier ensemble bielle-manivelle dont la manivelle est fixée sur le servomoteur de commande des mouvements de la tuyère vers la droite et vers la gauche ; et, dans un plan perpendiculaire à l'aile et en partie supérieure en position de montage, un point de fixation d'une bielle d'un second ensemble bielle-manivelle dont la manivelle est fixée sur le servomoteur de commande des mouvements de la tuyère vers le haut et vers le bas.

Chaque première partie de tuyère peut comporter, dans un plan parallèle à l'aile en position de montage, deux rainures longitudinales opposées recevant chacune une barre transversale pour la fixation de la turbine associée à la paroi interne voisine de la nacelle ou, dans le cas où plusieurs turbines sont prévues, à la turbine voisine.

L'aile comporte avantageusement une partie principale centrale, deux parties latérales aptes à pivoter vers le haut en position de montage, et deux ailerons arrière.

L'aile peut en particulier avoir une forme analogue à la forme générale du corps d'une raie manta dont les régions de pointe correspondent aux parties latérales, l'aile étant alors appelée aile Manta.

L'aéronef selon la présente invention peut comporter un train d'atterrissage, une roue avant montée folle et deux roues arrière.

L'aile peut être, à l'avant, surmontée par une partie cabine, ladite partie cabine pouvant être amovible. Sans la partie cabine, l'aéronef peut voler de façon autonome.

La présente invention porte également sur une turbine constituée par un rotor à pales logé dans un carter cylindrique et une tuyère associée à la turbine, ladite tuyère étant constituée de trois parties, à savoir
- une première partie de tuyère constituée par une première bague apte à être enfilée sur le carter de la turbine et à y être fixée, et portant extérieurement :
   - un support pour un premier servomoteur de commande des mouvements de la tuyère vers la droite et vers la gauche et un support pour un second servomoteur de commande des mouvements de la tuyère vers le haut et vers le bas ; et
   - deux partenaires de liaison pivot diamétralement opposés, situés dans un plan vertical ;
- une deuxième partie de tuyère constituée par une deuxième bague apte à être enfilée partiellement sur la première bague dans sa région d'extrémité tournée vers la sortie d'air en position de montage et à pivoter autour d'un axe vertical, et portant :
   - intérieurement, deux partenaires de liaison pivot aptes à coopérer avec les partenaires de liaison pivot de la première partie de tuyère ; et
   - extérieurement, deux partenaires de liaison pivot diamétralement opposés, situés dans un plan horizontal ; et
- une troisième partie de tuyère constituée par une troisième bague apte à être enfilée partiellement sur la deuxième bague dans sa région d'extrémité tournée vers la sortie d'air en position de montage et portant :
   - intérieurement, deux partenaires de liaison pivot apte à coopérer avec les partenaires de liaison pivot portés extérieurement par la deuxième partie de tuyère ; et
   - extérieurement, dans un plan parallèle horizontal et d'un côté, un point de fixation d'une bielle d'un premier ensemble bielle-manivelle dont la manivelle est fixée sur le servomoteur de commande des mouvements de la tuyère vers la droite et vers la gauche ; et, dans un plan vertical et en partie supérieure en position de montage, un point de fixation d'une bielle d'un second ensemble bielle-manivelle dont la manivelle est fixée sur le servomoteur de commande des mouvements de la tuyère vers le haut et vers le bas.

Pour mieux illustrer l'objet de la présente invention, on va en décrire ci-après, à titre indicatif et non limitatif, un mode de réalisation particulier avec référence au dessin annexé.

Sur ce dessin :
- la Figure 1 est une vue en perspective d'un aéronef selon un premier mode de réalisation de la présente invention orienté avec son ensemble moteur au premier plan et à gauche ;
- la Figure 2 est une vue en perspective de l'aéronef de la Figure 1 orienté avec ses ailerons arrière vers l'avant et à droite ;
- la Figure 3 est une vue de dessus de l'aéronef des Figures 1 et 2 ;
- la Figure 4 est une vue de face de l'aéronef des Figures 1 à 3, côté ensemble moteur ;
- la Figure 5 est une vue correspondant à la Figure 1, montrant l'aéronef avec ses trois roues sorties ;
- la Figure 6 est une vue de face correspondant à la Figure 4 de l'aéronef avec ses trois roues sorties ;
- la Figure 7 est une vue arrière, côté ailerons arrière, de l'aéronef avec ses trois roues sorties ;
- la Figure 8 est une vue de côté de l'aéronef avec ses roues sorties ;
- la Figure 9 est une vue en perspective et de côté de la partie avant de l'aéronef avec ses roues sorties ;
- la Figure 10 est une vue correspondant à la Figure 1 en perspective éclatée ;
- la Figure 11 est, à plus grande échelle et en perspective dans l'orientation de la Figure 1, une vue de la partie avant de l'aéronef montrant l'ensemble moteur de l'aéronef en place dans sa nacelle ;
- la Figure 12 est une vue en perspective de dessus de la partie avant de l'aéronef ;
- la Figure 13 est une vue en perspective éclatée d'une turbine de l'ensemble moteur et des trois parties de sa tuyère associée, le côté entrée d'air étant vers l'avant et à gauche ;
- la Figure 14 est une vue correspondant à la Figure 13, le côté sortie d'air étant vers l'avant et à droite ;
- la Figure 15 est une vue correspondant à la Figure 13 avec le côté entrée d'air vers la droite ;
- la Figure 16 est une vue de dessus d'une turbine en position de vol en ligne droite avec soufflage d'air dans la direction axiale, le servomoteur et l'ensemble bielle-manivelle étant omis ;
- la Figure 17 est une vue correspondant à la Figure 16, la turbine étant orientée pour souffler l'air sur une région de côté de l'aile ;
- la Figure 18 est une vue en perspective de la turbine en position de vol en ligne droite avec soufflage d'air vers le haut, le servomoteur et l'ensemble bielle-manivelle étant omis ;
- la Figure 19 est une vue correspondant à la Figure 18 mais avec soufflage d'air vers le bas ;
- la Figure 20 est une vue de la turbine équipée des servomoteurs et des ensembles bielle-manivelle et montrée du côté droit par rapport à la Figure 16 ;
- la Figure 21 est une vue de la turbine équipée des servomoteurs et des ensembles bielle-manivelle et montrée dans la même position que celle de la Figure 16 ;
- la Figure 22 est une vue correspondant à la Figure 21, mais avec inversion des côtés de montage des servomoteurs ;
- la Figure 23 est une vue en perspective correspondant à la Figure 21 ;
- la Figure 24 est une vue en perspective correspondant à la Figure 22 ;
- la Figure 25 est une vue analogue à la Figure 1 d'un aéronef selon un deuxième mode de réalisation de l'invention ;
- la Figure 26 est est une vue en perspective de l'aéronef de la Figure 25 orienté avec ses ailerons arrière vers l'avant et à droite ;
- la Figure 27 est une vue de dessus de l'aéronef des Figures 25 et 26 ;
- la Figure 28 est une vue de face de l'aéronef des Figures 25 à 27, côté ensemble moteur ;
- la Figure 29 est une vue analogue à la Figure 5 d'un aéronef selon un troisième mode de réalisation de l'invention ; et
- la Figure 30 est une vue en perspective et de côté de la partie avant de l'aéronef de la Figure 29 avec ses roues sorties.

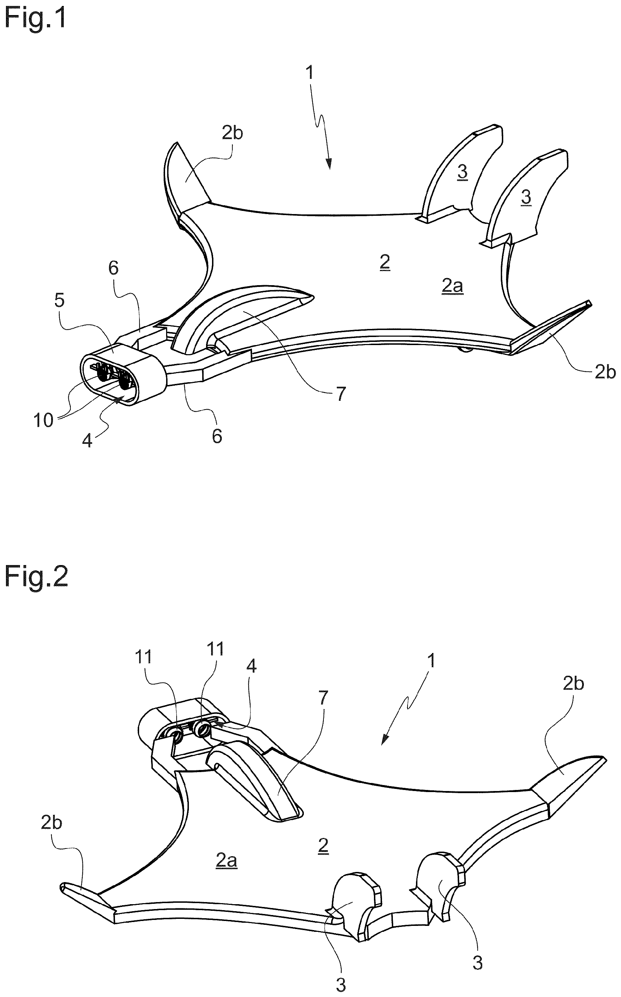

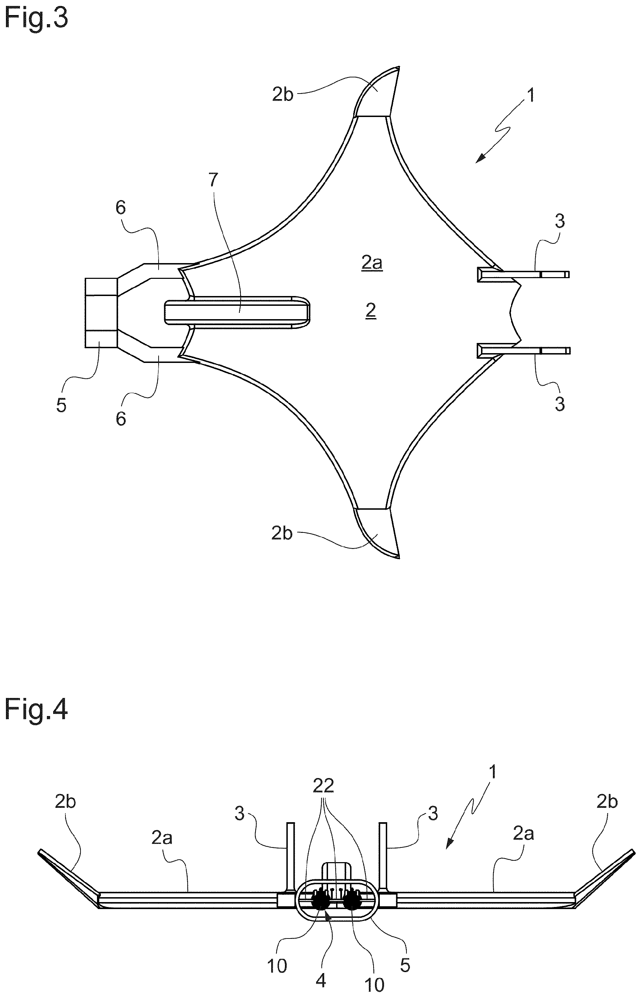

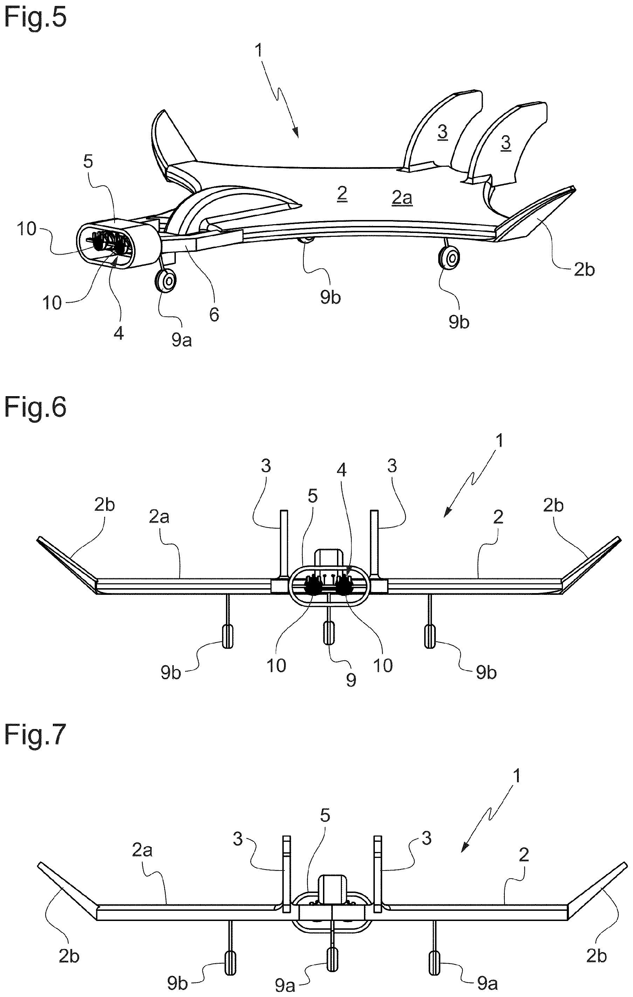

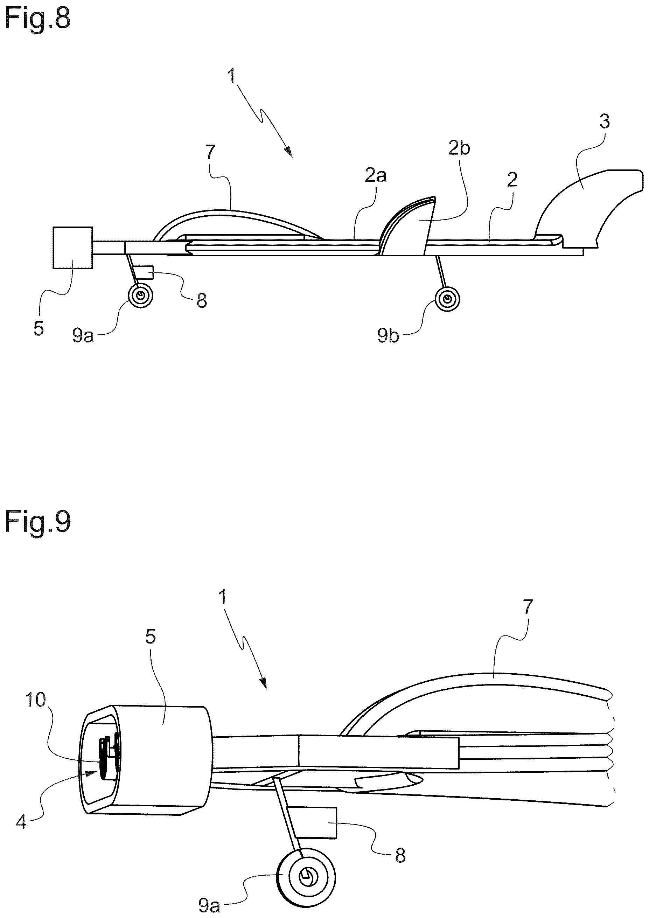

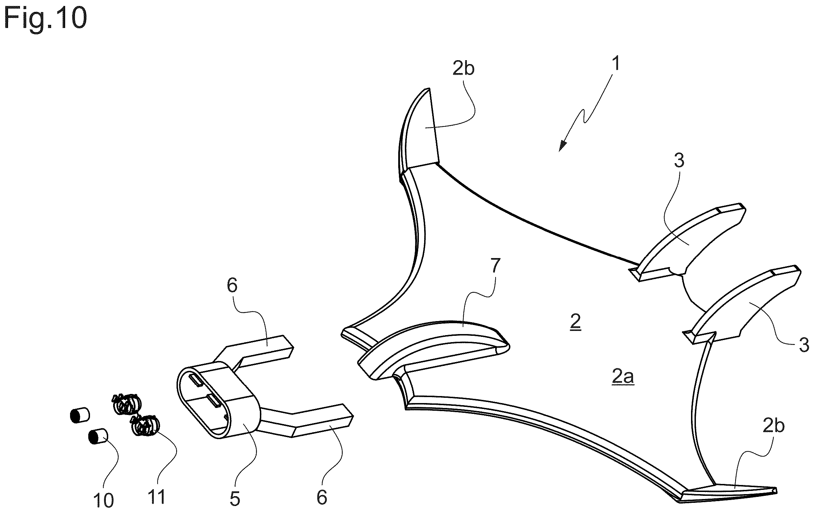

Si l'on se réfère aux Figures 1 à 12, on peut voir que l'on a désigné par 1 dans son ensemble un aéronef selon un premier mode de réalisation particulier de la présente invention.

L'aéronef 1 comporte une voilure sous la forme d'une aile Manta 2, une dérive sous la forme de deux ailerons arrières 3 portés par l'aile 2 et un ensemble moteur 4 disposé devant l'aile 2 pour la propulsion de l'aéronef 1.

L'aile 2 comporte une partie centrale 2a, de grande surface, et deux parties latérales 2b aptes à être repliées vers le haut en position de vol.

L'ensemble moteur 4 est logé dans une nacelle 5 reliée à l'aile 2 à l'avant de celle-ci par deux bras 6. La nacelle 5 a la forme générale d'un boîtier ouvert à l'avant et à l'arrière si l'on considère sa position en place sur l'aéronef 1, et elle est reliée à l'aile 2 par deux bras latéraux 6.

L'aéronef 1 comporte une cabine 7 et comporte un train d'atterrissage 8 et trois roues, à savoir une roue folle avant 9a et deux roues arrière 9b.

La cabine 7 est disposée dans la région avant de l'aile 2.

Dans l'exemple représente, l'ensemble moteur 4 est constitué par deux turbines 10 disposées côte à côte dans la nacelle 5, avec leurs axes orientés selon une ligne parallèle à la ligne longitudinale moyenne de l'aile 2. Les turbines 10 créent chacune un jet d'air qui, en fonctionnement, est évacué vers l'aile 2 au moyen d'une tuyère orientable 11.

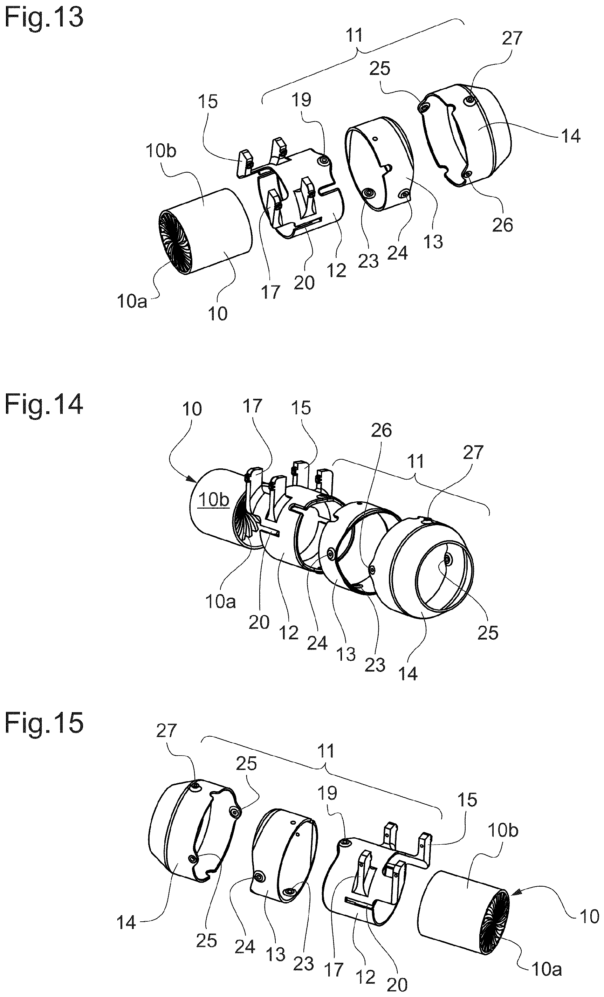

Les Figures 13 à 15 sont des vues éclatées en perspective d'une turbine 10 et de sa tuyère associée 11

Une turbine 10 est constituée par un rotor à pales 10a logé dans un carter cylindrique 10b, l'axe du rotor 10a étant confondu avec l'axe longitudinal du carter 10b.

Une tuyère 11 associée à une turbine 10 comporte trois parties 12, 13 et 14.

La première partie de tuyère 12 est constituée par une première bague apte à être enfilée sur le carter 10b de la turbine 10 et à y être fixée, et portant extérieurement :
- un support 15 pour un premier servomoteur 16 de commande des mouvements de la tuyère 10 vers la droite et vers la gauche et un support 17 pour un second servomoteur 18 de commande des mouvements de la tuyère 10 vers le haut et vers le bas ; et
- deux partenaires de liaison pivot 19 diamétralement opposés, situés dans un plan perpendiculaire au plan moyen de l'aile 2.

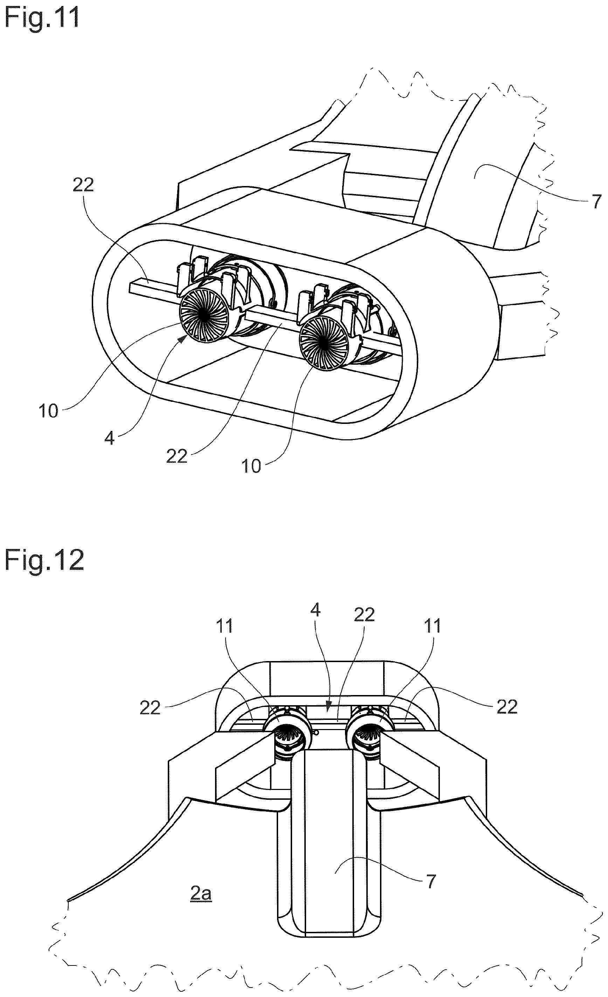

La bague de cette première partie de tuyère 12 comporte dans un plan parallèle à l'aile 2 en position de montage, deux rainures (20) longitudinales opposées. Dans l'exemple représenté, une rainure 20 reçoit un élément de traverse latéral 22 pour la fixation de la turbine 10 associée à la paroi interne voisine de la nacelle 5 et, l'autre rainure 20 reçoit un élément de traverse central 21 pour la fixation à la turbine 10 voisine (Figure 11).

La deuxième partie de tuyère 13 est constituée par une deuxième bague apte à être enfilée partiellement sur la première bague dans sa région d'extrémité tournée vers l'aile 2 en position de montage et à pivoter autour d'un axe perpendiculaire au plan moyen de l'aile 2 en position de montage, et portant :
- intérieurement, deux partenaires 23 de liaison pivot aptes à coopérer avec les partenaires 19 de liaison pivot de la première partie de tuyère 12 ; et
- extérieurement, deux partenaires 24 de liaison pivot diamétralement opposés, situés dans un plan parallèle au plan moyen de l'aile 2 en position de montage.

La troisième partie de tuyère 14 constituée par une troisième bague apte à être enfilée partiellement sur la deuxième bague dans sa région d'extrémité tournée vers l'aile 2 en position de montage et portant :
- intérieurement, deux partenaires 25 de liaison pivot apte à coopérer avec les partenaires 24 de liaison pivot portés extérieurement par la deuxième partie 13 de tuyère ; et
- extérieurement, dans un plan parallèle à l'aile 2 et d'un côté, un point de fixation 26 d'une bielle 29 d'un premier ensemble bielle-manivelle 28 dont la manivelle 30 est fixée sur le servomoteur 16 de commande des mouvements de la tuyère vers la droite et vers la gauche ; et, dans un plan perpendiculaire à l'aile 2 et en partie supérieure en position de montage, un point de fixation 27 d'une bielle 32 d'un second ensemble bielle-manivelle 31 dont la manivelle 33 est fixée sur le servomoteur 18 de commande des mouvements de la tuyère vers le haut et vers le bas.

Afin de conserver le débit d'air passant à travers la turbine 10, le diamètre du carter 10b correspond au diamètre de la bague de la troisième partie de tuyère 14 du côté sortie d'air.

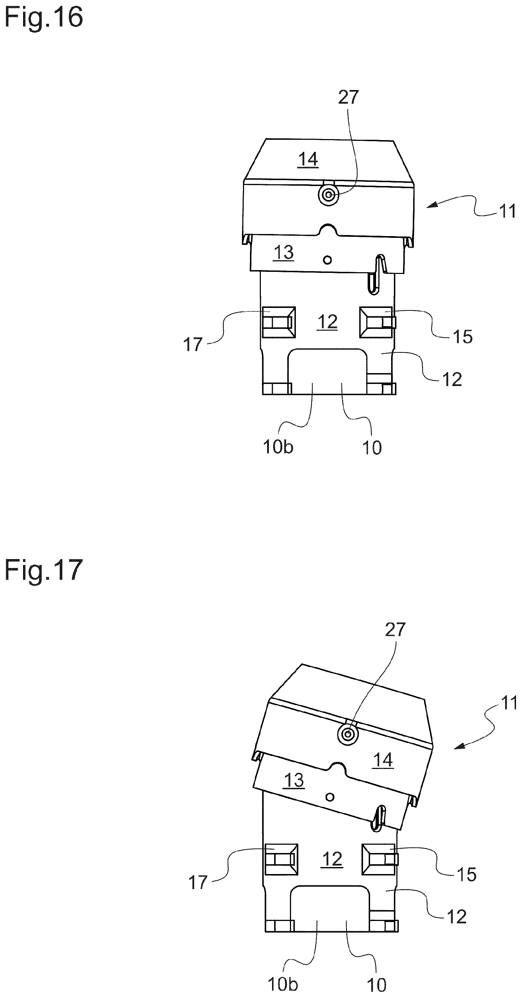

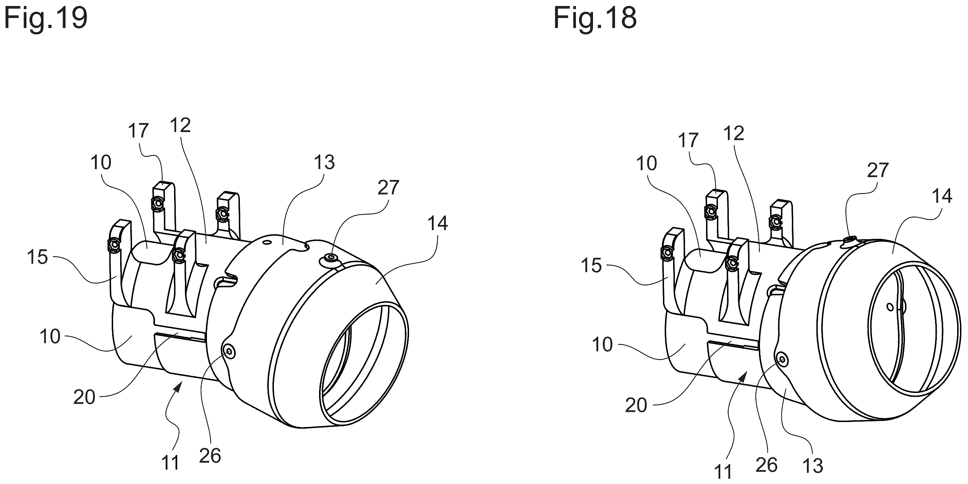

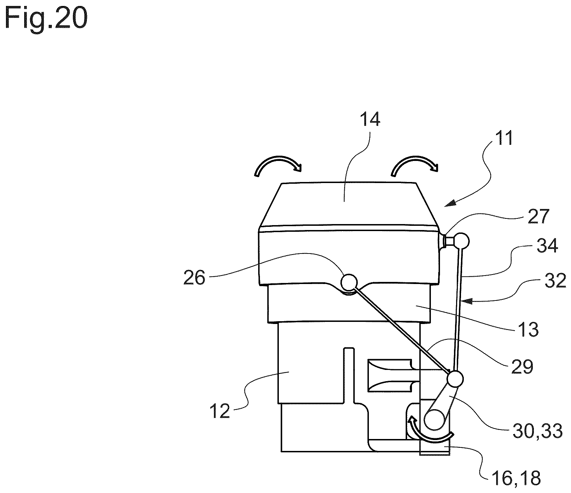

Les Figures 16 à 19 et 20 à 22 montrent le mouvement des deuxième et troisième partie de tuyère 13 et 14.

Le servomoteur 16 est associé à l'ensemble bielle-manivelle 28 dont la bielle 29 est reliée à la troisième partie de tuyère 14 par l'intermédiaire du point de fixation 26.

Le servomoteur 18 est associé à l'ensemble bielle-manivelle 31 dont la bielle 32 est reliée à la troisième partie de tuyère 14 par l'intermédiaire du point de fixation 27.

Lorsque le servomoteur 16 entraîne la manivelle 30 à tourner dans le sens horaire, la bielle 29 est tirée vers le corps de la turbine 10. En faisant ainsi, la bielle 29 tire sur le point de fixation 26, ce qui amène la deuxième partie de tuyère 13 à tourner vers la gauche par rotation autour de la liaison pivot formée par les partenaires 19 et 23. Inversement, lorsque le servomoteur 16 entraîne la manivelle 30 à tourner dans le sens anti-horaire, la deuxième partie de tuyère 13 est amenée à tourner vers la droite.

Lorsque le servomoteur 18 entraîne la manivelle 33 à tourner dans le sens horaire, la bielle 32 est tirée vers le corps de la turbine 10. En faisant ainsi, la bielle 32 tire sur le point de fixation 27, ce qui amène la troisième partie de tuyère 14 à tourner vers le haut par rotation autour de la liaison pivot formée par les partenaires 24 et 25. Inversement, lorsque le servomoteur 18 entraîne la manivelle 33 à tourner dans le sens anti-horaire, la troisième partie de tuyère 14 est amenée à tourner vers le bas.

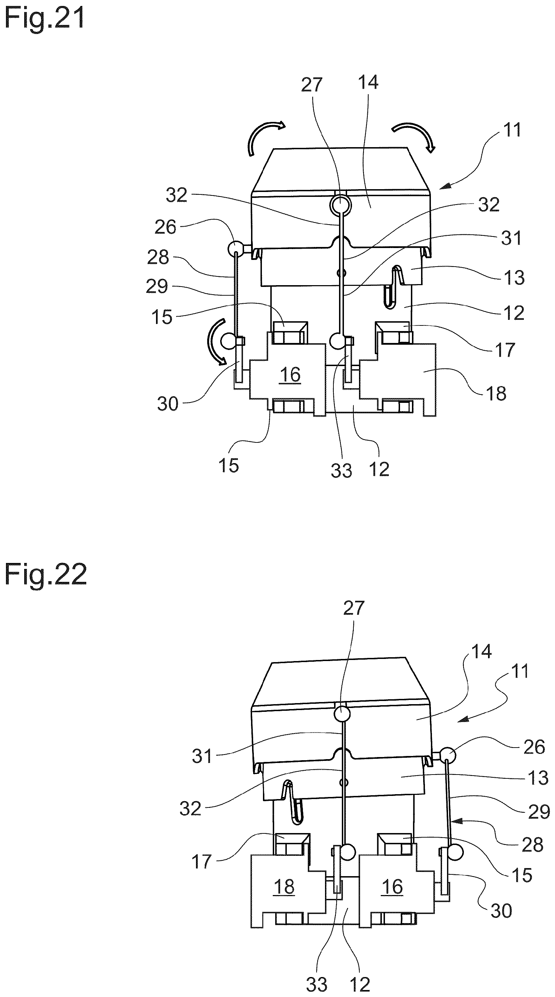

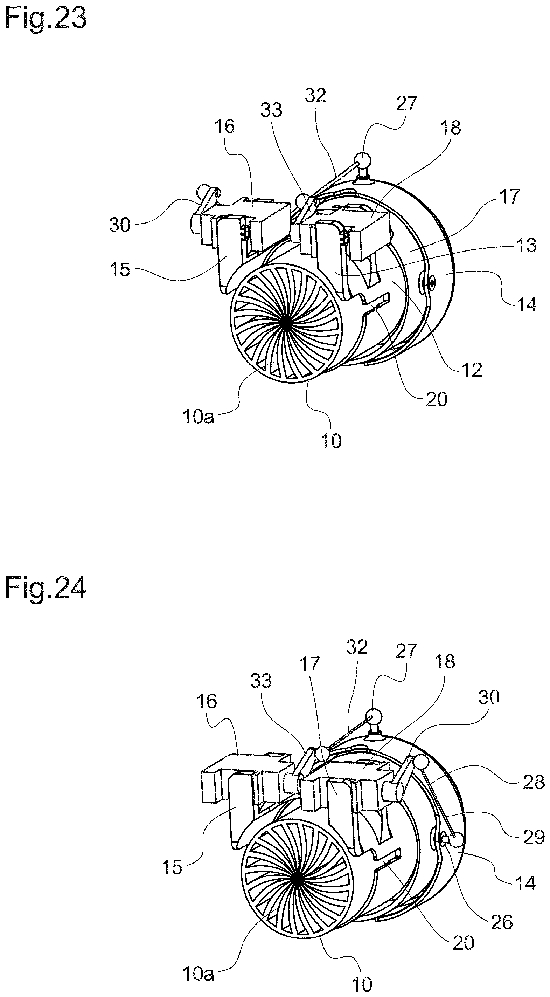

Sur les Figures 21 et 23, le servomoteur 16 est monté à gauche de la turbine et le servomoteur 18 à droite. Ce montage peut être inversé, tel que cela est représenté sur les Figures 22 et 24, où le servomoteur 16 est monté à droite et le servomoteur 18 à gauche.

En utilisation, il est donc possible d'orienter le flux sortant des turbines 10 par l'orientation des tuyères 11, chacune des tuyères ayant un mouvement synchrone avec l'autre. Par exemple, lorsque les tuyères 11 sont orientées vers la droite, l'aéronef 1 est entraîné vers la droite. Lorsque les tuyères 11 sont orientées vers le base, l'aéronef est entraîné vers le bas.

De plus, lorsque l'avion est sol, il est possible de guider l'avion vers la droite ou vers la gauche par l'orientation du flux d'air des turbines 10. Cela permet d'avoir seulement une roue folle 9a à l'avant de l'aéronef 1, qui n'a alors besoin d'un autre mécanisme de guidage de l'aéronef 1 au sol, permettant ainsi d'économiser du poids par l'absence d'un tel mécanisme.

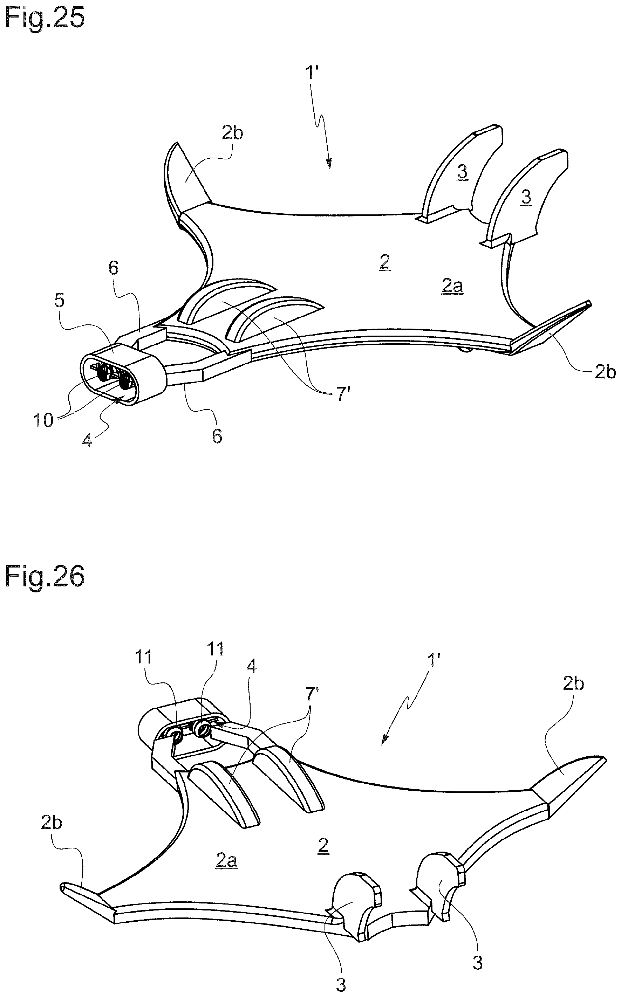

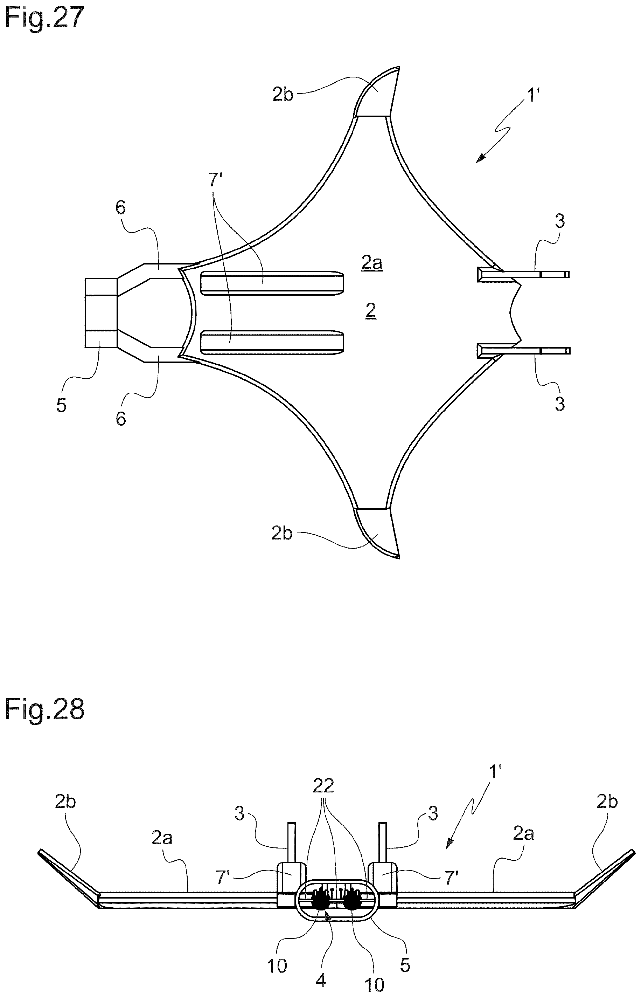

Si l'on se réfère aux Figures 25 à 28, on peut voir que l'on a désigné par 1' dans son ensemble un aéronef selon un deuxième mode de réalisation particulier de la présente invention.

Par rapport à l'aéronef 1, l'aéronef 1' présente non pas une cabine mais deux cabines 7'. Chaque cabine 7' est disposée dans la partie avant de l'aéronef sensiblement dans le prolongement du bras 6 correspondant.

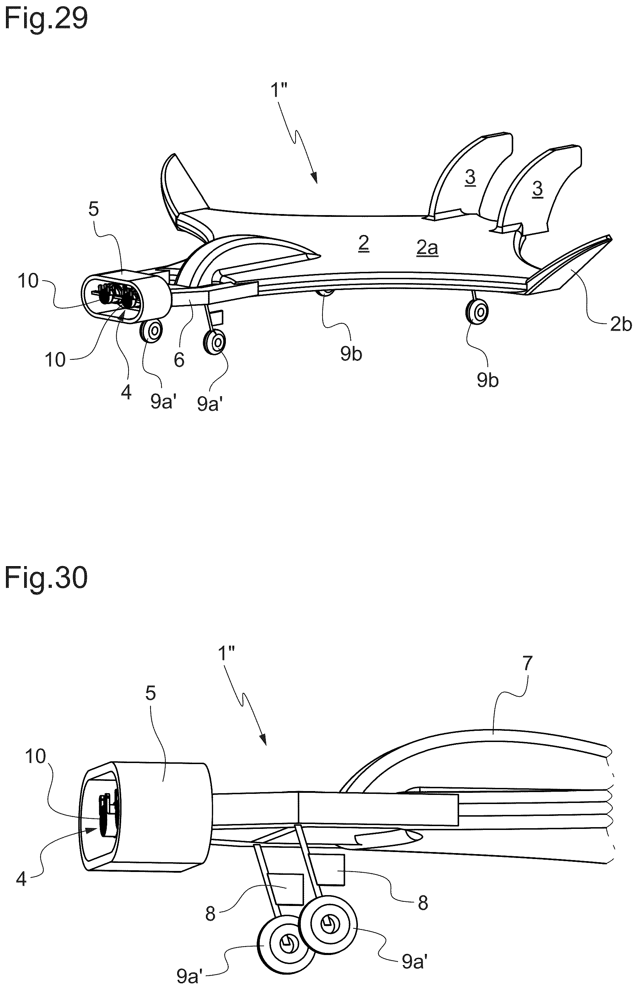

Si l'on se réfère aux Figures 29 et 30, on peut voir que l'on a désigné par 1" dans son ensemble un aéronef selon un troisième mode de réalisation particulier de la présente invention.

Par rapport à l'aéronef 1, l'aéronef 1" présente non pas une seule roue folle avant mais deux roues folles avant 9a'. Chaque roue folle 9a' est portée par le bras 6 correspondant.

### Chiffres de référence

1, 1', 1" Aéronef
2 Aile
2a Partie centrale de l'aile
2b Partie latérale de l'aile
3 Aileron arrière
4 Ensemble moteur
5 Nacelle
6 Bras
7, 7' Cabine
8 Train d'atterrissage
9a, 9a' Roue folle avant
9b Roue arrière
10 Turbine
10a Rotor à pales
10b Carter
11 Tuyère
12 Première partie de tuyère
13 Deuxième partie de tuyère
14 Troisième partie de tuyère
15 Premier support de servomoteur
16 Premier servomoteur (mouvement gauche-droite)
17 Second support de servomoteur
18 Second servomoteur (mouvement haut-bas)
19 Partenaire de liaison pivot extérieur sur partie de tuyère 12
20 Rainure
21 Elément de traverse central
22 Elément de traverse latéral
23 Partenaire de liaison pivot intérieur sur partie de tuyère 13
24 Partenaire de liaison pivot extérieur sur partie de tuyère 13
25 Partenaire de liaison pivot intérieur sur partie de tuyère 14
26 Point de fixation pour bielle de l'ensemble bielle-manivelle au premier servomoteur 16 (droite-gauche)
27 Point de fixation pour bielle de l'ensemble bielle-manivelle au premier servomoteur 18 (haut-bas)
28 Ensemble bielle-manivelle associé au servomoteur 16
29 Bielle de l'ensemble 28
30 Manivelle de l'ensemble 28
31 Ensemble bielle-manivelle associé au servomoteur 18
32 Bielle de l'ensemble 31
33 Manivelle de l'ensemble 31

## Revendications

1. - Aéronef (1) à traction vectorielle, comportant :
- une voilure se présentant sous la forme d'une aile (2) ;
- une dérive portée par ladite aile (2) ; et
- un ensemble moteur (4) relié à ladite aile (2) pour la traction de l'aéronef (1),
**caractérisé par le fait que** ledit ensemble moteur (4) est disposé devant ladite aile (2) et dans le plan moyen de celle-ci en étant relié à cette dernière par au moins un bras (6), et qu'il comporte au moins une turbine (10) configurée pour créer en fonctionnement un jet d'air évacué vers ladite aile (2) par une tuyère orientable (11).

2. - Aéronef (1) selon la revendication 1, **caractérisé par le fait que** la dérive se présente sous la forme d'au moins un aileron arrière (3) porté par l'aile (2).

3. - Aéronef (1) selon l'une des revendications 1 et 2, **caractérisé par le fait que** l'axe d'une turbine (10) est orienté selon une ligne parallèle à la ligne avant-arrière de l'aile (2).

4. - Aéronef (1) selon l'une des revendications 1 à 3, **caractérisé par le fait que** l'ensemble moteur (4) comporte deux turbines (10).

5. - Aéronef (1) selon l'une des revendications 1 à 4, **caractérisé par le fait que** l'ensemble moteur (4) est disposé dans une nacelle (5) par laquelle il est relié à l'aile (2) par le ou les bras (6), et qui est ouverte à l'avant et à l'arrière en position de montage.

6. - Aéronef (1) selon l'une des revendications 1 à 5, **caractérisé par le fait que** l'ensemble moteur (4) est amovible.

7. - Aéronef (1) selon l'une des revendications 1 à 6, **caractérisé par le fait qu'**une turbine (10) est constituée par un rotor à pales (10a) logé dans un carter cylindrique (10b) et que la tuyère (11) associée à la turbine (10), montée pour diriger le jet d'air vers l'aile (2) de l'aéronef (1), est constituée de trois parties, à savoir
- une première partie de tuyère (12) constituée par une première bague apte à être enfilée sur le carter (10b) de la turbine (10) et à y être fixée, et portant extérieurement :
- un support (15) pour un premier servomoteur (16) de commande des mouvements de la tuyère (10) vers la droite et vers la gauche et un support (17) pour un second servomoteur (18) de commande des mouvements de la tuyère (10) vers le haut et vers le bas ; et
- deux partenaires de liaison pivot (19) diamétralement opposés, situés dans un plan perpendiculaire au plan moyen de l'aile (2) ;
- une deuxième partie de tuyère (13) constituée par une deuxième bague apte à être enfilée partiellement sur la première bague dans sa région d'extrémité tournée vers l'aile (2) en position de montage et à pivoter autour d'un axe perpendiculaire au plan moyen de l'aile (2) en position de montage, et portant :
- intérieurement, deux partenaires (23) de liaison pivot aptes à coopérer avec les partenaires (19) de liaison pivot de la première partie de tuyère (12) ; et
- extérieurement, deux partenaires (24) de liaison pivot diamétralement opposés, situés dans un plan parallèle au plan moyen de l'aile (2) en position de montage ; et
- une troisième partie de tuyère (14) constituée par une troisième bague apte à être enfilée partiellement sur la deuxième bague dans sa région d'extrémité tournée vers l'aile (2) en position de montage et portant :
- intérieurement, deux partenaires (25) de liaison pivot apte à coopérer avec les partenaires (24) de liaison pivot portés extérieurement par la deuxième partie (13) de tuyère ; et
- extérieurement, dans un plan parallèle à l'aile (2) et d'un côté, un point de fixation (26) d'une bielle (29) d'un premier ensemble bielle-manivelle (28) dont la manivelle (30) est fixée sur le servomoteur (16) de commande des mouvements de la tuyère vers la droite et vers la gauche ; et, dans un plan perpendiculaire à l'aile (2) et en partie supérieure en position de montage, un point de fixation (27) d'une bielle (32) d'un second ensemble bielle-manivelle (31) dont la manivelle (33) est fixée sur le servomoteur (18) de commande des mouvements de la tuyère vers le haut et vers le bas.

8. - Aéronef (1) selon les revendications 5 et 7 prises en combinaison, **caractérisé par le fait que** chaque première partie de tuyère (12) comporte, dans un plan parallèle à l'aile (2) en position de montage, deux rainures (20) longitudinales opposées recevant chacune une barre transversale (21, 22) pour la fixation de la turbine (10) associée à la paroi interne voisine de la nacelle (5) ou, dans le cas où plusieurs turbines (10) sont prévues, à la turbine (10) voisine.

9. - Aéronef (1) selon l'une des revendications 1 à 8, **caractérisé par le fait que** l'aile (2) comporte une partie principale centrale (2a), deux parties latérales (2b) aptes à pivoter vers le haut en position de montage, et deux ailerons arrière (3).

10. - Aéronef (1) selon la revendication 9, **caractérisé par le fait que** l'aile a une forme analogue à la forme générale du corps d'une raie manta dont les régions de pointe correspondent aux parties latérales (2b), l'aile (2) étant alors appelée aile Manta.

11. - Aéronef (1) selon l'une des revendications 1 à 10, **caractérisé par le fait qu'**il comporte un train d'atterrissage (8), une ou deux roues avants montées folles (9a ; 9a') et deux roues arrière (9b).

12. - Aéronef (1) selon l'une des revendications 1 à 11, **caractérisé par le fait que** l'aile (2) est, à l'avant, surmontée par au moins une partie cabine (7 ; 7'), la ou lesdites parties cabines (7 ; 7') pouvant être amovibles.
